# EUROPEAN PATENT SPECIFICATION

(11) **EP 4 514 494 B1**
(45) Date of publication and mention of the grant of the patent: **14.10.2026**
(21) Application number: 23738120.7
(22) Date of filing: 08.06.2023
(51) Int. Cl.: B01D 11/02, B01D 11/04

(54) **APPARATUS AND METHOD FOR TREATING A FLOW OF A SUBSTANCE TO BE TREATED BY MEANS OF A COUNTERFLOW OF AN EXTRACTING SUBSTANCE**
VORRICHTUNG UND VERFAHREN ZUR BEHANDLUNG EINES STOFFSTROMS ZUR BEHANDLUNG MITTELS GEGENSTROM EINES EXTRAKTIONSSTOFFS
APPAREIL ET PROCÉDÉ DE TRAITEMENT D'UN ÉCOULEMENT D'UNE SUBSTANCE À TRAITER AU MOYEN D'UN CONTRE-COURANT D'UNE SUBSTANCE D'EXTRACTION

(30) Priority: 09.06.2022 IT 202200012218
(43) Date of publication of application: 05.03.2025
(73) Proprietor: Bob Service Srl, 10153 Torino (IT)
(72) Inventor: CAVAGLIA', Giuliano, 10023 Chieri (TO) (IT)
(74) Representative: Robba, Pierpaolo
(86) International application number: PCT/IB2023/055917
(87) International publication number: WO 2023/238076

(56) References cited:
- CN-A- 105 289 023
- US-A1- 2014 050 633
- US-A1- 2020 139 316

## Description

The invention relates to an apparatus and a method for treating a flow of substance to be treated by means of a counterflow of an extracting substance.

### Technical Field

The invention pertains to the field of the technologies used to enhance phase contact and hence matter and heat transport, and to enhance chemical reaction kinetics.

The apparatus according to the invention finds advantageous applications in several industrial sectors, for example as extractor of high-quality functional foods, starting from vegetable substances and natural products.

A particular though not exclusive application of the invention relates to the extraction of functional foods starting from vegetable matrices either solid or in powder form or crushed in pieces of various sizes, such as, for example, malt spent grains deriving from the production of beer, or from waste sludge from food industry processing, for example containing orange peels.

### Prior Art

WO2018/146647 discloses an apparatus for enhancing phase contact between one or more liquid phase(s) and a solid phase, comprising high-turbulence sections alternating with sections of hydrodynamic cavitation with high shear force, wherein a first flow of a first substance in solid phase can travel either in in equicurrent or countercurrent relative to a second flow of a second substance in liquid phase.

According to a particular embodiment of the teaching proposed therein, in the event that it is advantageous to cause countercurrent contact between the phases, such as in unitary operations of stripping, extraction, leaching, etc., the phases can be fed in opposite directions.

In a particular embodiment thereof, the apparatus disclosed in the mentioned prior art, allows treating a flow of substance to be treated by means of a counterflow of an extracting substance. In the configuration provided to this purpose, the known apparatus comprises a motor-driven treatment assembly, in which said flows pass in substantially opposite directions and along substantially parallel directions.

In the known apparatus, there are provided a first fixed member and at least one corresponding member rotary relative to the fixed member and cooperating therewith to define cavitation stages capable of causing the phenomenon of hydrodynamic cavitation in a mixture of said substances passing in opposite directions in the apparatus and stages of turbulent mixing, alternating with cavitation stages.

In the known apparatus, there is provided a first fixed member and at least one corresponding member rotary relative to the fixed member and cooperating therewith to define a corresponding cavitation stage, capable of causing the phenomenon of hydrodynamic cavitation in a mixture of said substances passing in opposite directions within the apparatus. The cavitation stages are further alternated with stages of turbulent mixing.

One of the drawbacks encountered in the teaching provided by the mentioned prior art derives from the poor performance of the apparatus when it works in countercurrent.

The Applicant has observed that in an apparatus of the type described in WO2018/146647 there is a countercurrent flow of the solid phase of a substance to be treated, relative to the liquid phase of an extracting substance, thanks to the gradient of solidphase concentration that is formed along the axis of the apparatus, wherein the gradient decreases from the apparatus end from which the solid phase is fed to the apparatus end from which the liquid phase is fed, which is also the apparatus end from which the spent solid phase exits following extraction.

The Applicant has further observed that, by working with the following ratios: $L / S > 40$ where
L = liquid phase mass flow rate and
S = solid phase mass flow rate,
a condition of stable flow of solid phase is obtained, in the presence of a counterflow of liquid phase.

Upon decrease of the L/S ratio, an increase of criticality in maintaining the condition of stable flow of the solid phase is observed. Upon reaching an L/S ratio of about 30, a point of impossibility of stable countercurrent operation is reached, this resulting in the blockage of the operation of the apparatus due to the accumulation of the solid phase in the first chamber of turbulent mixing, i.e., typically the mixing chamber to which the solid phase is fed.

As is known, the L/S ratio is a parameter of paramount importance in industrial operations of solid-liquid extraction, because the higher the L/S ratio, the higher the flow rate of liquid, containing the extracted solute, to be subjected to the subsequent operations of separation, purification, concentration and drying, for the same quantity of end product obtained. This means that the higher the L/S ratio of the operation of solid-liquid extraction, the higher the investment cost for the separation, purification, concentration and drying section and the operating cost thereof.

For the investment and operating costs of a solid-liquid extraction installation to be economically competitive, the solid-liquid extraction section must be operated in the presence of the lowest possible L/S ratio, preferably L/S< 10 and, even more preferably, L/S<5.

A main object of the present invention is therefore to provide a solution to the aforementioned problem of how to optimize the performance of an apparatus for enhancing phase contact, when the substance to be treated travels in countercurrent relative to a flow of an extracting substance.

Another object of the invention is to provide an apparatus and a method for treating a flow of substance to be treated by means of counterflow of an extracting substance, which are more efficient relative to prior art and allow reduced operating costs.

Not least object of the invention is to provide an apparatus and a method of the type mentioned above that is industrially applicable on a large scale.

These and other objects are achieved with the apparatus and method as claimed in the appended claims, which form an integral part of the technical teaching provided in the present description in respect of the invention.

### Disclosure of the Invention

The apparatus according to the invention makes it possible to treat a flow of a substance to be treated by means of a counterflow of an extracting substance.

According to the invention, the substance to be treated and the extracting substance may take physical states different from each other, for example, the solid state and the liquid state, respectively.

The flow of substance to be treated may include, for example, a mass of material in the solid state, typically in the form of powder, crushed pieces, sludge, granules and flakes, in which components advantageous to be extracted, for example, polyphenols, proteins, dietary fibers and essential oils, are dispersed. The flow of extracting substance may consist of a substance in the liquid state, typically water.

Advantageously, the apparatus according to the invention is capable of causing an increase in the relative sliding speeds of the phases involved in a multiphase flow passing through the apparatus.

Advantageously, the apparatus according to the invention makes it possible to implement a low-temperature extraction process, preventing the oxidation phenomenon from being triggered, and thus enabling the production of high-quality polyphenols and proteins with high antioxidant power.

Advantageously, the apparatus according to the invention makes it possible to extract the aforementioned components with a higher level of efficiency than prior art and with a yield that is higher than 70% and can be of over 90%.

Advantageously, the apparatus according to the invention makes it possible to implement a process of extracting components, such as polyphenols, proteins, dietary fibers and essential oils, from a substance to be treated, either without or with a reduced use of volatile solvents.

Advantageously, the apparatus according to the invention makes it possible to implement an extraction process of the above-mentioned type that is quicker than currently known processes.

Not least advantage of the apparatus according to the invention derives from the reduced energy consumption compared to currently employed extraction technologies.

In a particular embodiment of the apparatus according to the invention, thanks to the combined action of the high turbulence, the shear force and the phenomenon of cavitation, the components of the substance to be treated are extracted quickly, typically in less than 3 minutes, and brought to the liquid phase.

The apparatus according to the invention mainly comprises a motor-driven treatment assembly in which a flow of a substance to be treated and a counterflow of an extracting substance travel in a countercurrent regimen. More specifically, although within the motor-driven treatment assembly the flows of substance to be treated and extracting substance take various directions, imposed by the movement and shape of the members forming the treatment assembly, said flows pass altogether through the treatment assembly, i.e., from the respective inlet port to the respective outlet port, in substantially parallel but substantially opposite directions.

According to the invention, the motor-driven treatment assembly has at least one fixed member and at least one corresponding movable member, rotary relative to the fixed member and cooperating therewith to define a corresponding cavitation stage capable of causing the phenomenon of hydrodynamic cavitation in a mixture of said substances.

According to the invention, turbulent mixing of said substances is provided upstream and/or downstream of the cavitation stage.

Preferably, the cavitation stage is capable of causing a high shear force and a high cavitation on the mixture of substances. Even more preferably, said stage with high shear force and high cavitation can subject the mixture of substances to a cavitation regimen characterized by a cavitation number σ < 1.

According to the invention, advantageously, the movable member and/or the fixed member is provided with a plurality of radial protrusions, or teeth.

Advantageously, according to the invention, the protrusions of the movable and fixed member of the hydrodynamic cavitation stages with high shear force make it possible to establish an optimized countercurrent flow regimen of the solid phase, i.e., of the substance to be treated, with respect to the liquid phase.

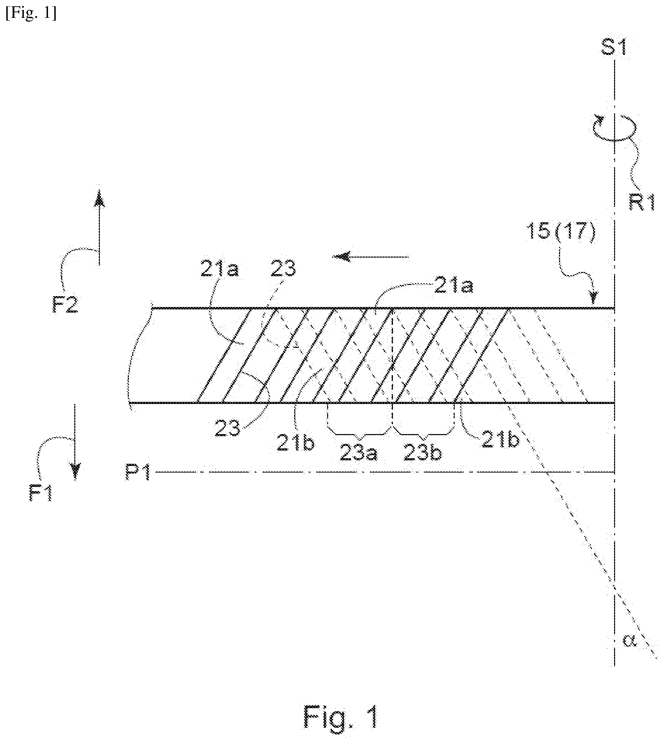

In particular, referring to Fig. 1, this schematically shows a preferred configuration of the protrusions of the fixed and movable members, in which said protrusions are rectilinear and inclined relative to the rotation axis S1 of the movable member, which rotates in the direction indicated by arrow R1.

The Applicant has observed that, by inclining the geometry of the protrusions 21a of the fixed members 15 and the geometry of the protrusions 21b of the movable members 17 relative to the rotation axis S1 of the motor-driven treatment assembly, a propelling effect for the solid phase is obtained so as to allow a countercurrent flow of the solid phase with respect to the flow of the liquid phase also in the presence of very low L/S ratios, typically L/S< 1.

By propelling effect, it is meant an effect of forward thrust or forward movement.

Any angle of inclination of the protrusions 21a,21b of the fixed or movable members relative to the rotation axis of the movable members, other than α = 0° and α = 90° is capable of exerting a propelling effect in the direction of advancement F1 of the solid flow of the substance to be treated, in countercurrent with respect to the direction F2 of the liquid flow of the extracting substance.

However, it has been found that:
i. For angles within the range 0° < α < 3°, the propelling effect is so important that it is necessary to operate the motor-driven treatment assembly at low rotational speeds, typically < 500 rpm to avoid working with a concentration of solid that is not uniform along the rotation axis S1 of the assembly, i.e., to avoid a ratio Cₛₙ/Cₛ₁ > 3, where:
   Cₛ₁ = concentration of solid phase in the turbulent mixing chamber to which the solid phase is fed, and
   Cₛₙ = concentration of solid phase in the turbulent mixing chamber upon exit of the solid phase itself.

With such rotational speed regimen, however, the intensities of turbulence, shear force and cavitation are penalized.

ii. For angles within the range 80° < α < 90°, the propelling effect is limited, to the extent that it is necessary to operate the treatment assembly at high rotational speeds, typically > 3000 rpm to avoid working with a concentration of solid that is not uniform along the rotation axis S1 of the assembly, i.e., to avoid a ratio Cₛ₁/Cₛₙ > 3.

With such rotational speed regimen, however, the intensities of turbulence, shear force and cavitation are penalized because they are too high and cannot be modulated downwards; the power consumption absorbed by the motor moving the movable members of the motor-driven treatment assembly and hence the operating costs are also penalized.

iii. Preferably, in order to improve the convenience of industrial implementation, the inclination angle of the protrusions of the movable and fixed members relative to the rotation axis of the movable members must be within the range 3° < α < 80°. Within this range, the range 5° < α < 60° is the range that allows maximum operating flexibility for the treatment assembly and is thus the preferred range. Even more preferred as range of optimal inclination angles is the range 10° < α < 45°.

The inclination of the radial protrusions of the fixed and movable members relative to the rotation axis of the treatment assembly generates a propelling effect in the direction of advancement of the solid phase, i.e., of the substance to be treated, which effect also generates a counterthrust on the liquid phase advancing in countercurrent. Thanks to this phenomenon, a tendency to an increase in the pressure inside the treatment assembly as well as an increase in the prevalence required for the pump feeding the liquid phase to the apparatus are thus obtained.

To avoid this phenomenon, the clearance between rotary member and fixed member must determine a cross-section on a plane perpendicular to the rotation axis of the movable member such that the average speed of advancement of the liquid phase (i.e., the "mean liquid phase cross sectional velocity") is < 1 m/s; and preferably < 0.1 m/s.

To prevent generation of uncontrolled local turbulent phenomena, it is also preferable that the inclination of the protrusions of the fixed members and the inclination of the protrusions of the movable members are selected so as to be the same.

By identifying with the dimensionless Froude number the parameter of characterization of the operational regimen of the treatment assembly or solid-liquid contactor, where the Froude number is defined as follows:
Froude number, $Fr = w 2 R / g$ where:
w: angular velocity of rotation of the rotor(s) [rad/s]
g: gravity acceleration = 9.806 [m/s]
R: outer radius of the rotor [m]
and by identifying with α the inclination angle of the protrusions of the fixed and movable members relative to the rotation axis of the contactor, the following inter-propulsion index (TPI) has been defined: $TPI = Log \left(Fr\right) \times Cos \left(α\right)$ where:
   Log(Fr): is the 10 based logarithm of the Froude number;
   Cos(α): is the cosine of the inclination angle α of the radial protrusions, or teeth, of the fixed members, or stators, and of the movable members, or rotors, i.e., of the stator and rotor teeth relative to the rotation axis S1 of the rotors.

In order for the solid-liquid contactor to be operatable in a stable countercurrent mode throughout the range of L/S ratios of industrial interest, i.e., 0.2 < (L/S) < 100, the inclination of the rotor-stator teeth as well as the configuration of the contactor and the operating regimen thereof must be such as to fulfil the ratio: $0.1 < TPI < 4 .$

In a preferred embodiment of the invention, the rotor and stator teeth and rectilinear inclined teeth.

According to the invention, the propelling effect in the direction of advancement of the solid phase can also be obtained with other configurations of teeth, for example parabolic or sigma-shaped configurations.

Fig. 2 shows an example of parabolic teeth, where:
α: trailing angle = angle of propelling inclination corresponding to the angle of actual inclination of the teeth and to the angle to be used when assessing TPI;
β: leading angle.

α ≥ 0 and β ≥ 0 apply to this configuration, and α = 30° and β = 0° apply to the illustrated example.

Fig. 3 shows an example of "sigma-shaped" teeth, where:
α: trailing angle = angle of propelling inclination corresponding to the angle of actual inclination of the teeth and to the angle to be used when assessing TPI;
β : leading angle.

α = ≥ 0 and β ≥ 0 apply to this configuration, and α = β = 45° applies to the illustrated example.

According to the invention, at least one of the protrusions of the first fixed members and/or of the first movable members is configured so as to cause, during rotation of the movable member, a propelling effect over the flow of substance to be treated, in a direction substantially contrary to the counterflow of extracting substance.

According to the invention, said at least one propelling radial protrusion comprises a propelling surface inclined relative to the rotation axis of the rotary member.

Still according to the invention, said surface faces downstream of the fixed or rotary member, respectively, in the direction of travel through the cavitation stage of the flow of substance to be treated.

Still according to the invention, said at least one propelling radial protrusion comprises a propelling surface the projection of which on a plane perpendicular to the rotation axis of the movable member determines, on said plane, a surface having a non-null area.

More particularly, said at least one propelling radial protrusion comprises a surface the projection of which on a plane perpendicular to the rotation axis of the rotary member and located downstream of the rotary member in the direction of travel of the flow of substance to be treated determines, on said plane, a surface having a non-null area.

In addition, the motor-driven treatment assembly is preferably arranged so as to cause passage of said flows inside the apparatus in substantially parallel but substantially opposite directions.

The motor-driven treatment assembly is capable of rotating the movable members with a velocity suitable to cause the phenomena of cavitation and mixing inside the assembly. Said velocity can indicatively be between 500 and 5000 rpm and is more preferably between 700 and 3000 rpm.

The rotation of the movable members of the motor-driven assembly can be imparted, for example, by an electric gearmotor.

To ensure a proper effect of cavitation on the mixture of substances passing through the motor-driven treatment assembly, the facing surfaces of the protrusions of the rotary member and fixed member further have, preferably, a parabolic contour.

Even more preferably, the protrusions of the rotary member have a parabolic contour in the circumferential direction. In addition, the parabolic contour of said protrusions preferably lies along the curve of a parabola the vertex of which is located at the rear edge of the protrusion, relative to the direction of rotation of the movable member, and along the radius connecting said edge to the center of the movable member or of the fixed member, respectively, the focus of the parabola also lying on said radius.

According to this preferred embodiment of the invention, the protrusions of the rotary member and the fixed member are made with an identical, specular parabolic contour.

The equation of the preferred parabola for the contour of the protrusions of the fixed member and the movable member is expressed by the function Y = 0.0062974·X2.

Between the protrusions of the fixed and movable members there is provided a clearance that is minimum at the rear edges of the teeth of the movable and fixed members, when said edges lie substantially aligned along the corresponding radiuses of the movable and fixed members.

Advantageously, according to a preferred embodiment of the invention, the motor-driven treatment assembly is provided with at least one second fixed member and at least one corresponding second movable member, rotary relative to the fixed member. Said second fixed member and said second movable member cooperate with each other to define a corresponding mixing stage in order to promote mixing of said substances passing in opposite directions within the motor-driven treatment assembly.

In a preferred embodiment of the invention, the apparatus comprises a housing that houses the motor-driven treatment assembly. The first fixed member of the motor-driven treatment assembly and the second fixed member of the motor-driven treatment assembly are also preferably integral with the housing and can possibly be made as a single piece with said housing, thereby giving the fixed members of the motor-driven treatment assembly a substantially monolithic configuration.

In a particular embodiment of the invention, the apparatus comprises a motor-driven treatment assembly provided with a plurality of cavitation stages and a plurality of mixing stages, alternating with each other and organized so as to be passed through in succession by said flow of substance to be treated and said counterflow of extracting substance in substantially parallel but substantially opposite directions.

Preferably, the first fixed members further comprise corresponding first cylindrical stator rings provided with radial protrusions, and the first rotary members comprise a plurality of rotor discs provided with radial protrusions and surrounded by said first stator rings. Said first stator rings define a corresponding cavitation chamber in which said first rotary members operate. According to the invention, at least part of said radial protrusions are propelling radial protrusions.

The second fixed members comprise corresponding second cylindrical stator rings, and said second rotary members comprise a plurality of radial protrusions and are surrounded by said second stator rings. Said second stator rings define a corresponding mixing chamber in which said second rotary members operate.

According to a preferred embodiment of the invention, said radial protrusions of the second rotary members comprise corresponding cylindrical pins or pegs, capable of giving the mixture of encountered substances a high-turbulence regimen, during rotation of the movable members.

According to the invention, preferably, said mixing stage is capable of subjecting the multiphase flow to a high-turbulence regimen with Re > 500000.

Preferably, the cylindrical pins extend radially from the rotation axis of the second movable members over a length such that the diameter of the outer circumference described by the pin is in the range 0.3 - 0.9 x D, where D is the mixing chamber inner diameter defined by the inner wall of the second fixed members or second stator rings.

Furthermore, preferably, said pins are at least two, or even more preferably three, in number and are arranged on parallel, preferably non-coincident planes perpendicular to the rotation axis of the second rotary member.

Preferably, all the movable members are rotationally fixed to a single motor-driven common rotary shaft.

In an exemplary embodiment of the invention, the motor-driven treatment assembly comprises three cavitation stages and four mixing stages. Still according to this embodiment of the invention, the flow of substance to be treated passes in a first direction and sequentially through the following: a first mixing stage, a first cavitation stage, a second mixing stage, a second cavitation stage, a third mixing stage, a third cavitation stage and a fourth mixing stage. The counterflow of extracting substance passes through said stages sequentially in a second direction, opposite to the first direction: a fourth mixing stage, a third cavitation stage, a third mixing stage, a second cavitation stage, a second mixing stage, a first cavitation stage and a first mixing stage.

The motor-driven treatment assembly is provided with an inlet port for the substance to be treated and an outlet port for the spent substance to be treated, and an inlet port for the extracting substance and an outlet port for the extracted substance.

Preferably, the inlet port for the substance to be treated and the outlet port for the extracted substance are arranged in the first mixing stage, whereas the inlet port for the extracting substance and the outlet port for the spent substance to be treated are arranged in the last mixing stage.

In a form of usage typical of the apparatus according to the invention, the substance to be treated arrives at the inlet port in the solid or fluid state containing a solid part, in the form of powder, crushed pieces, sludge and flakes, and the spent substance to be treated arrives at the outlet port in the form of a substantially squeezed solid residue. Still referring to this form of usage of the apparatus, the extracting substance and the extracted substance arrive in the liquid form.

According to the invention, the extracting liquid phase can also be fed through lateral nozzles through the stator wall at the high-turbulence mixing sections, thereby causing a current of extracting substance, which typically is at the liquid state, given by the combination of the flows of extracting substance coming from the corresponding inlet port and the lateral nozzles.

### Description of the Figures

Some preferred embodiments of the invention will be provided by way of nonlimiting examples with reference to the annexed figures, in which:
- Fig. 1 is an example of rectilinear inclined teeth;

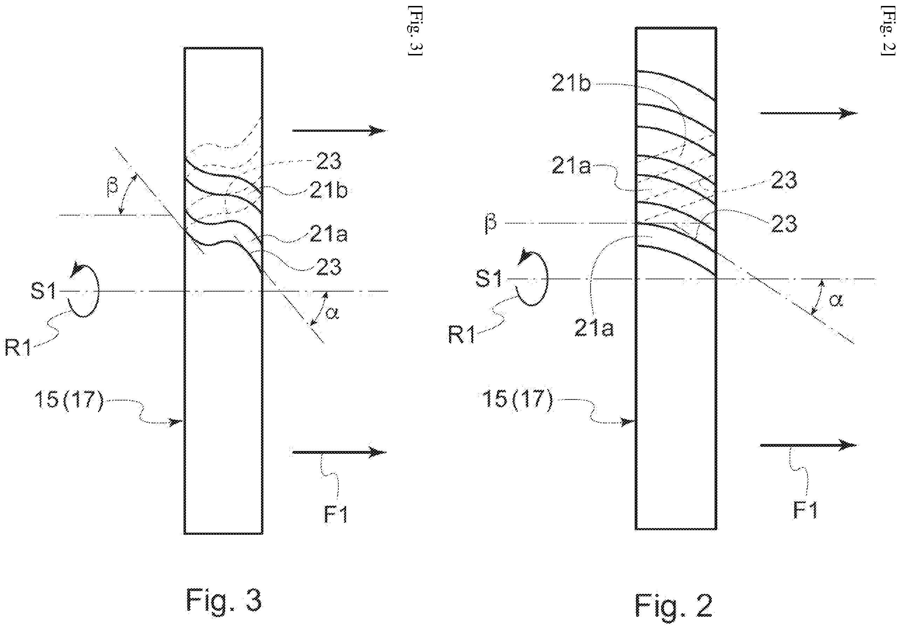

- Fig. 2 is an example of parabolic inclined teeth;
- Fig. 3 is an example of sigma-shaped inclined teeth;

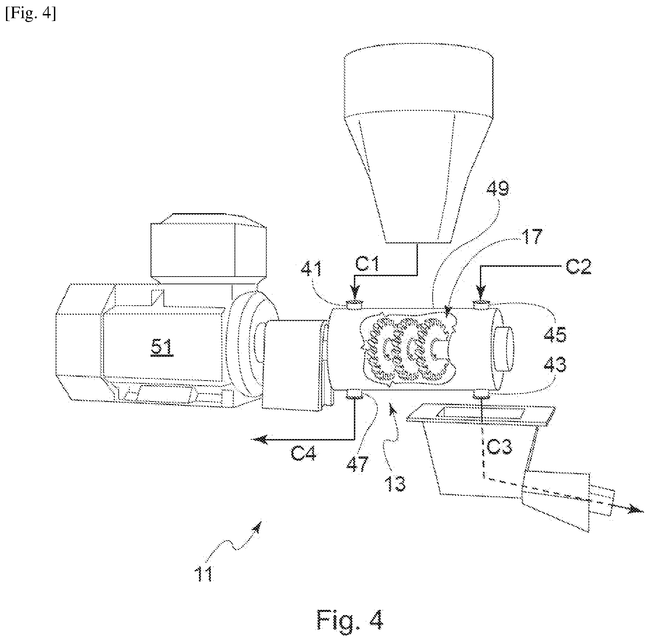

- Fig. 4 is a partially cut perspective view of an apparatus according to the invention;

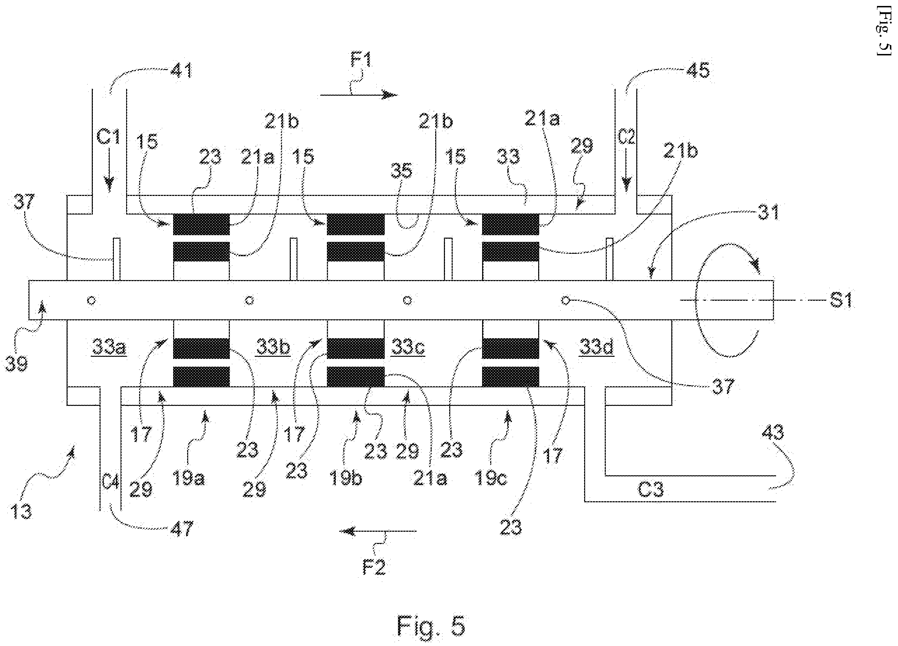

- Fig. 5 is a schematic sectional view along a longitudinal plane of the apparatus of Fig. 1;

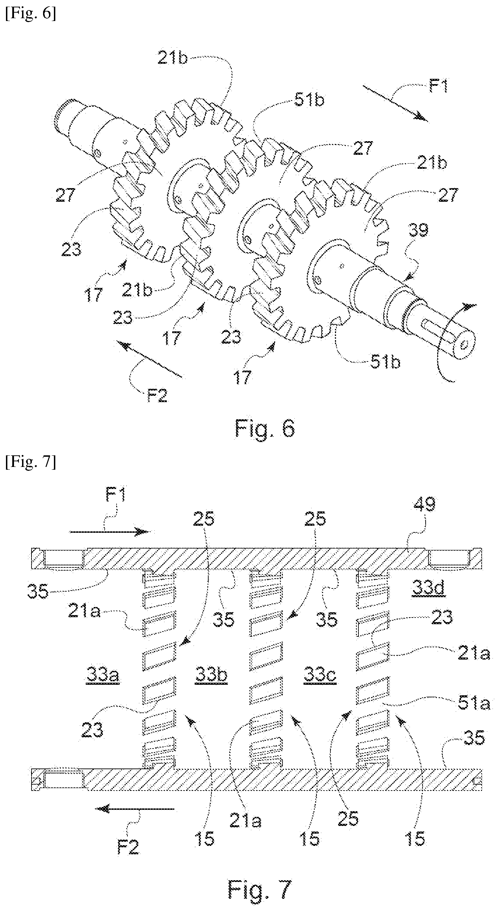

- Fig. 6 is a perspective view of the rotary part of the treatment assembly of the apparatus of Fig. 1;
- Fig. 7 is a plan view of a fixed part of the treatment assembly of the apparatus of Fig. 1.

### Description of Some Preferred Embodiments of the Invention

Referring to **Figs. 4** to **7****,** there is illustrated an apparatus **11** for treating a flow or current of a substance to be treated **C1** by means of a counterflow or countercurrent of an extracting substance **C2,** made in accordance with a preferred embodiment of the invention.

In the illustrated embodiment, the apparatus **11** comprises a motor-driven treatment assembly **13** in which a flow of substance to be treated **C1** and a counterflow of extracting substance **C2** pass along substantially parallel but substantially opposite directions shown in the figure with arrows **F1** and **F2,** respectively.

Still referring to the illustrated embodiment, in the motor-driven treatment assembly **13** there are provided three first fixed members 15 and three corresponding first movable members **17.** The movable members **17** rotate about a rotation axis **S1** relative to the fixed members **15** and cooperate therewith to define corresponding cavitation stages **19a,19b,19c** capable of causing the phenomenon of hydrodynamic cavitation in a mixture of substances passing in opposite directions inside the motor-driven treatment assembly **13.**

According to the invention, the first fixed members **15** and the first movable members **17** are provided with a plurality of radial protrusions **21a,21b,** configured so as to cause, during rotation of the movable member **17** about the axis **S1,** a propelling effect on the flow of substance to be treated, in a direction **F1** substantially opposite to the counterflow **F2** of extracting substance.

The propelling radial protrusions **21a,21b** comprise a propelling surface **23,** inclined relative to the rotation axis **S1** of the first movable member **17.**

The first fixed members **15** comprise corresponding first cylindrical stator rings **25** provided with propelling radial protrusions **21a** and the first rotary members **17** comprise corresponding rotor discs **27** provided with propelling radial protrusions **21b** and surrounded by said stator rings **25.**

As shown in **Fig.1****,** the propelling surface **23** of the first fixed member **15** and of the first movable member **17** is such that the projection of said surface on a plane **P1**, perpendicular to the rotation axis **S1** and located downstream of the propelling surface **23** in the traveling direction **F1** of the substance to be treated, determines on said plane **P1** a respective surface **23a, 23b** having a non-null area.

Referring again to **Figs. 4** to **7****,** the motor-driven treatment assembly **13** is provided with four second fixed members **29** and four second movable members **31.** The movable members **31** rotate about the axis **S1** relative to the fixed members **29** and cooperate therewith to define corresponding stages of turbulent mixing **33a,33b,33c,33d** to promote mixing of the substances passing in opposite directions inside the motor-driven treatment assembly **13.**

The second fixed members **29** comprise corresponding second cylindrical stator rings **35,** and the second movable members **31** comprise a plurality of second radial protrusions **37** and are surrounded by said second stator rings **35.**

In the illustrated embodiment, the second radial protrusions **37** comprise corresponding rectilinear cylindrical pins or pegs.

In the illustrated embodiment of the invention, the motor-driven treatment assembly **13** comprises altogether three cavitation stages **19** and four mixing stages **33.**

In the illustrated exemplary configuration, the cavitation stages **19** and the mixing stages **33** alternate with each other and are organized so as to be passed through in succession by the flow of substance to be treated in a first direction **F1** and said counterflow of extracting substance in a second, opposite direction **F2,** in substantially parallel directions.

Still referring to the illustrated embodiment, all the movable members **17, 31** are rotationally fixed to a single motor-driven common rotary shaft **39.**

Other embodiments of the invention will be conceivable in which the cavitation stages and mixing stages can be any in number and variously organized.

The motor-driven treatment assembly **13** is provided with inlet and outlet ports for the substances passing therethrough. In the illustrated embodiment, the assembly **13** is provided with an inlet port **41** for the substance to be treated **C1** and with an outlet port **43** for the spent substance to be treated **C3,** with an inlet port **45** for the extracting substance **C2** and with an outlet port **47** for the extracted substance **C4.**

Still referring to the illustrated embodiment, the apparatus **11** comprises a housing **49,** the fixed members of the cavitation stages **19** and of the mixing stage **33** being integral with said housing. Said first fixed members **15** and said second fixed members **29** are also made as a single piece with the housing **49.** The shaft **39** is connected to a gearmotor **51** capable of rotating the movable members **17** and **31** of the motor-driven treatment assembly **13.**

In the illustrated embodiment, the adjacent first radial protrusions **21a,21b** comprise parallel, inclined, facing surfaces **23,** which define corresponding inclined grooves or channels **51a, 51b** for the passage of said substances during rotation of the first movable members **17.**

### Example

Solid-liquid extraction tests were carried out on solid phases consisting of plant matrices (both in the form of powder with a particle size between 50 and 250 microns and in the form of crushed leaves, or 'tea-cut' with a particle size between 0.5 and 2.5 mm), by using water as extracting liquid and by feeding the phases in countercurrent on an apparatus **11** according to the described exemplary embodiment of the invention, with the following features:
N° of stages of turbulent mixing **33:** four;
N° of high-shear-force and cavitation stages **19:** three (first fixed members and first movable members being all provided with propelling protrusions, i.e., protrusions defining inclined surfaces **23** capable of causing, during rotation of the movable member **17,** a propelling effect on the flow of substance to be treated);
Stages of turbulent mixing **33** alternating with high-shear-force and cavitation stages **19;**
Inner diameter of the stages of turbulent mixing **33:** 206 mm;
Axial length of the stages of turbulent mixing **33:** 80 mm;
Pegs **37** of the mixing stage: six pegs arranged on parallel planes perpendicular to the rotation axis **S1** of the motor-driven treatment assembly, so as to form a spiral with a forward thrust when the shaft **39** rotates. The circumference described by the pegs **37** during rotation is 0.9 x D, where D = inner diameter of the mixing stages **33;**
Inner radius of the cavitation stages **19:** 96 mm;
Minimum rotor-stator clearance of the cavitation stages **19: 3** mm (first stage **19a**), 2.2 mm (second stage **19b**) and 1.5 mm (third stage **19c**);
Axial length of the first stator rings **25** and rotor discs **27** of the cavitation stages: 30 mm;
Rotational speed of the shaft **39:** in the range 500 - 2500 rpm;
Number of stator grooves **51a:** 18;
Number of rotor grooves **51b:** 18;
Stator teeth **21a:** rectilinear with inclination **α** of 18° relative to the rotation axis **S1** of the apparatus.
Rotor teeth **21b:** rectilinear with inclination **α** of 18° relative to the rotation axis **S1** of the apparatus.

With this configuration it is possible to obtain a flow of the solid phase in countercurrent relative to the liquid phase and stable throughout the tested range of rotational speeds (i.e., 500 - 2500 rpm, corresponding to the range of TPI between 1.35 and 2.68) and up to ratios L/S = 0.2.

The invention as described and illustrated is susceptible to numerous alternatives and modifications, falling within the same inventive principle.

## Claims

1. An apparatus **(11)** for treating a flow of a substance to be treated by means of a counterflow of an extracting substance, said apparatus comprising a motor-driven treatment assembly **(13)** in which said flows pass in substantially opposite directions **(F1,F2)** and in which there are defined at least one first fixed member **(15)** and at least one corresponding first movable member **(17)** rotary relative to the fixed member and cooperating therewith to define a corresponding cavitation stage **(19)** capable of causing the phenomenon of hydrodynamic cavitation in a mixture of said substances, wherein said at least one fixed member **(15)** and/or said at least one movable member **(17)** is provided with a plurality of radial protrusions **(21a,21b),** at least one of which is configured so as to cause, during rotation of the movable member **(17),** a propelling effect over the flow of substance to be treated, in a direction **(F1)** substantially opposite to the counterflow **(F2)** of extracting substance, **characterized in that** said at least one propelling radial protrusion **(21a,21b)** comprises a propelling surface **(23)** the projection of which on a plane **(P1)** perpendicular to the rotation axis of the movable member **(17)** determines, on said plane, a surface **(23a,23b)** having a non-null area, and **in that** said at least one propelling radial protrusion **(21a,21b)** comprises the propelling surface **(23)** inclined relative to the rotation axis **(S1)** of the movable member **(17).**

2. The apparatus according to claim 1, wherein the motor-driven treatment assembly **(13)** is provided with at least one corresponding second fixed member **(29)** and at least one second movable member **(31)** rotary relative to the fixed member and cooperating therewith to define a corresponding stage of turbulent mixing **(33)** to promote mixing of said substances passing in opposite directions inside the motor-driven treatment assembly.

3. The apparatus according to claim 1 or 2, wherein the motor-driven treatment assembly **(13)** comprises a plurality of cavitation stages **(19)** and a plurality of mixing stages **(33),** alternating with each other and organized so as to be passed through in succession by said flow of substance to be treated and said counterflow of extracting substance in substantially parallel but substantially opposite directions.

4. The apparatus according to claim 3, wherein said first fixed members **(15)** comprise corresponding first cylindrical stator rings **(25)** provided with radial protrusions **(21a),** and wherein said first rotary members **(17)** comprise corresponding rotor discs **(27)** provided with radial protrusions **(21b)** and surrounded by said first stator rings, and wherein said radial protrusions **(21a,21b)** are propelling radial protrusions.

5. The apparatus according to any of the preceding claims, wherein said at least one propelling radial protrusion **(21a, 21b)** has a rectilinear or parabolic or sigma-shaped inclined configuration.

6. The apparatus according to claim 3 or 4 or 5, wherein said second fixed members **(29)** comprise corresponding second cylindrical stator rings **(35),** and wherein said second rotary members **(31)** comprise a plurality of radial protrusions **(37)** and are surrounded by said second stator rings, and wherein said radial protrusions comprise corresponding cylindrical pins.

7. The apparatus according to any of the preceding claims, wherein adjacent radial protrusions **(21a,21b)** comprise mutually facing parallel inclined surfaces **(23)** defining corresponding inclined grooves or channels **(51a,51b)** for the passage of said substances.

8. The apparatus according to claim 7, wherein said mutually facing parallel inclined surfaces are inclined relative to the rotation axis **(S1)** of the motor-driven treatment assembly of any angle (α) comprised between 3 and 80 degrees.

9. The apparatus according to claim 8, wherein said inclination angle **(α)** is comprised between 5 and 60 degrees.

10. The apparatus according to claim 9, wherein said inclination angle **(α)** is comprised between 10 and 45 degrees.

11. The apparatus according to any of the preceding claims, wherein the cavitation stage **(19)** subjects the mixture of said substances to a cavitation regimen **characterized by** a cavitation number σ < 1.

12. A method for treating a flow of a substance to be treated by means of a counterflow of an extracting substance, said method comprising the steps of:
- arranging a motor-driven treatment assembly **(13)** comprising at least one first fixed member **(15)** and at least one corresponding first movable member **(17)** rotary relative to the fixed member and cooperating therewith to define a corresponding cavitation stage **(19)** capable of causing the phenomenon of hydrodynamic cavitation in a mixture of said substances, said at least one fixed member **(15)** and/or said at least one movable member **(17)** being provided with a plurality of radial protrusions **(21a,21b)** comprising a propelling surface **(23)** inclined relative to the rotation axis **(S1)** of said first movable member **(17);**
- causing passage of said flows within said motor-driven treatment assembly **(13)** in substantially parallel but substantially opposite directions;
- promoting, during rotation of the first movable member, a propelling effect over the flow of substance to be treated, in a direction **(F1)** substantially opposite to the counterflow **(F2)** of extracting substance, by means of at least one of said radial protrusions **(21a,21b),** wherein said propelling radial protrusions **(21a,21b)** comprise a propelling surface **(23)** the projection of which on a plane **(P1)** perpendicular to the rotation axis of the movable member **(17)** determines, on said plane, a surface **(23a,23b)** having a non-null area.

13. The method according to claim 12, wherein there is provided a step of causing, in said substances, a turbulent mixing upstream and downstream of the cavitation stage.

14. The method according to claim 13, comprising a motor-driven treatment assembly **(13)** provided with a plurality of cavitation stages **(19)** and a plurality of mixing stages **(33),** alternating with each other and organized so as to be passed through in succession by said flow of substance to be treated and said counterflow of extracting substance in parallel but opposite directions.

15. The method according to claim 14, wherein, the motor-driven treatment assembly **(13)** comprises three cavitation stages **(19)** and four mixing stages **(33),** wherein the flow of substance to be treated passes in a first direction and sequentially through the following: a first mixing stage, a first cavitation stage, a second mixing stage, a second cavitation stage, a third mixing stage, a third cavitation stage and a fourth mixing stage and the counterflow of extracting substance passes through said stages sequentially in a second direction, opposite to the first direction: a fourth mixing stage, a third cavitation stage, a third mixing stage, a second cavitation stage, a second mixing stage, a first cavitation stage and a first mixing stage.

## Patentansprüche

1. Vorrichtung (11) zum Behandeln eines Stroms einer mittels eines Gegenstroms einer extrahierenden Substanz zu behandelnden Substanz, wobei die Vorrichtung eine motorbetriebene Behandlungsbaugruppe (13) aufweist, in der die Ströme in den wesentlichen entgegengesetzten Richtungen (F1, F2) verlaufen und in der wenigstens ein erstes festes Teil (15) und wenigstens ein entsprechendes erstes bewegliches Teil (17) definiert sind, das relativ zu dem festen Teil drehbar ist und mit diesem zusammenwirkt, um eine entsprechende Kavitationsstufe (19) auszubilden, die dafür geeignet ist, das Phänomen hydrodynamische Kavitation in einer Mischung der Substanzen zu bewirken, wobei das wenigstens eine feste Teil (15) und/oder das wenigstens eine bewegliche Teil (17) mit mehreren radialen Vorsprüngen (21a, 21b) versehen ist, von denen wenigstens einer dafür ausgelegt ist, bei Rotation des beweglichen Teils (17) auf den Fluss der zu behandelnden Substanz eine antreibende Wirkung in einer Richtung (F1) auszuüben, die im wesentlichen dem Gegenstrom (F2) der extrahierenden Substanz entgegengesetzt ist, **dadurch gekennzeichnet, dass** der wenigstens eine antreibende radiale Vorsprung (21a, 21b) eine antreibende Oberfläche (23) aufweist, deren Projektion auf eine Ebene (P1) senkrecht zur Rotationsachse des beweglichen Teils (17) in dieser Ebene eine Fläche (23a, 23b) bestimmt, die eine von Null verschiedene Ausdehnung hat, und dass der wenigstens eine antreibende radiale Vorsprung (21a, 21b) die antreibende Oberfläche (23) aufweist, die relativ zu der Rotationsachse (S1) des beweglichen Teils (17) geneigt ist.

2. Vorrichtung nach Anspruch 1, wobei die motorbetriebene Behandlungsbaugruppe (13) mit wenigstens einem entsprechenden zweiten festen Teil (29) und wenigstens einem zweiten beweglichen Teil (31) versehen ist, das relativ zu dem festen Teil drehbar ist und mit diesem zusammen eine entsprechende Stufe turbulenter Vermischung (33) definiert, um die Vermischung der Substanzen zu fördern, die in der motorbetriebenen Behandlungsbaugruppe in entgegengesetzten Richtungen strömen.

3. Vorrichtung nach Anspruch 1 oder 2, wobei die motorbetriebe Behandlungsbaugruppe (13) mehrere Kavitationsstufen (19) und mehrere Mischstufen (33) aufweist, die miteinander abwechseln und so angeordnet sind, dass sie der Reihe nach von dem Strom der zu behandelnden Substanz und dem Gegenstrom der extrahierenden Substanz in im Wesentlichen parallelen aber im Wesentlichen entgegengesetzten Richtungen durchströmt werden.

4. Vorrichtung nach Anspruch 3, wobei die ersten festen Teile (15) entsprechende erste zylindrische Statorringe (25) aufweisen, die mit radialen Vorsprüngen (21a) versehen sind, und wobei die ersten drehbaren Teile (17) entsprechende Rotorscheiben (27) aufweisen, die mit radialen Vorsprüngen (21b) versehen und von den ersten Statorringen umgeben sind, und wobei die radialen Vorsprünge (21a, 21b) antreibende radiale Vorsprünge sind.

5. Vorrichtung nach einem der vorstehenden Ansprüche, wobei der wenigstens eine antreibende radiale Vorsprung (21a, 21b) eine rechteckige oder parabolische oder sigmaförmige geneigte Form hat.

6. Vorrichtung nach Anspruch 3 oder 4 oder 5, wobei die zweiten festen Teile (29) entsprechende zweite zylindrische Statorringe (35) aufweisen und wobei die zweiten drehbaren Teile (31) mehrere radiale Vorsprünge (37) aufweisen und von den zweiten Statorringen umgeben sind und wobei die radialen Vorsprünge entsprechende zylindrische Stifte aufweisen.

7. Vorrichtung nach einem der vorstehenden Ansprüche, wobei angrenzende radiale Vorsprünge (21a, 21b) einander zugewandte parallele geneigte Flächen (23) aufweisen, die entsprechend geneigten Nuten oder Kanäle (51a, 51b) für den Durchtritt der Substanzen definieren.

8. Vorrichtung nach Anspruch 7, wobei die einander zugewandten parallelen geneigten Flächen relativ zu der Drehachse (S1) der motorbetriebenen Behandlungsbaugruppe in einem Winkel (α) geneigt sind, der zwischen 3° und 80° beträgt.

9. Vorrichtung nach Anspruch 8, wobei der Neigungswinkel (α) zwischen 5° und 60° beträgt.

10. Vorrichtung nach Anspruch 9, wobei der Neigungswinkel (α) zwischen 10° und 45° beträgt.

11. Vorrichtung nach einem der vorstehenden Ansprüche, wobei die Kavitationsstufe (19) die Mischung der Substanzen einem Kavitationsregime aussetzt, das durch eine Kavitationszahl σ ≤ 1 charakterisiert ist.

12. Verfahren zum Behandeln eines Stroms einer mittels eines Gegenstroms einer extrahierenden Substanz zu behandelnden Substanz, wobei das Verfahren die folgenden Schritte aufweist:
- Anordnen einer motorbetriebenen Behandlungsbaugruppe (13), die wenigstens ein erstes festes Teil (15) und wenigstens ein entsprechendes erstes bewegliches Teil (17) aufweist, das relativ zu dem festen Teil drehbar ist und mit diesem zusammenwirkt, um eine entsprechende Kavitationsstufe (19) zu definieren, die in der Lage ist, das Phänomen hydrodynamischer Kavitation in einer Mischung der Substanzen zu bewirken, wobei das wenigstens eine feste Teil (15) und/oder das wenigstens eine bewegliche Teil (17) mit mehreren radialen Vorsprüngen (21a, 21b) versehen ist, die eine antreibende Oberfläche (23) bilden, die relativ zu der Drehachse (S1) des ersten beweglichen Teils (17) geneigt ist,
- Bewirken eines Verlaufs der Ströme in der motorangetriebenen Behandlungsbaugruppe (13) in im Wesentlichen parallelen aber im Wesentlichen entgegengesetzten Richtungen,
- Unterstützen, bei Rotation des ersten beweglichen Teils, eines antreibenden Effekts auf den Strom der zu behandelnden Substanz in einer Richtung (F1), die im Wesentlichen den Gegenstrom (F2) der extrahierenden Substanz entgegengesetzt ist, mittels wenigstens einem der radialen Vorsprünge (21a, 21b), wobei die antreibenden radialen Vorsprünge (21a, 21b) eine antreibende Fläche (23) aufweisen, deren Projektion auf eine Ebene (P1), senkrecht zur Rotationsachse des beweglichen Teils (17) in der Ebene eine Fläche (23a, 23b) definiert, die eine von Null verschiedene Ausdehnung hat.

13. Verfahren nach Anspruch 12, wobei ein Schritt des Bewirkens in den Substanzen einer turbulenten Vermischung stromaufwärts und stromabwärts der Kavitationsstufe vorgesehen ist.

14. Verfahren nach Anspruch 13, mit einer motorbetriebenen Behandlungsbaugruppe (13), die mit mehreren Kavitationsstufen (19) und mehreren Mischstufen (33) versehen ist, die alternierend aufeinanderfolgen und so angeordnet sind, dass sie von den Strömen der zu behandelnden Substanz und dem Gegenstrom der extrahierenden Substanz nacheinander in parallelen aber entgegengesetzten Richtungen durchlaufen werden.

15. Verfahren nach Anspruch 14, wobei die motorbetriebene Behandlungsbaugruppe (13) drei Kavitationsstufen (19) und vier Mischstufen (33) aufweist, wobei der Strom der zu behandelnden Substanz in einer ersten Richtung und nacheinander die folgenden durchläuft: eine erste Mischstufe, eine erste Kavitationsstufe, eine zweite Mischstufe, eine zweite Kavitationsstufe, eine dritte Mischstufe, eine dritte Kavitationsstufe und eine vierte Mischstufe und der Gegenstrom der extrahierenden Substanz die Stufen sequenziell in einer zweiten Richtung, die der ersten Richtung entgegengesetzt ist, durchläuft: eine vierte Mischstufe, eine dritte Kavitationsstufe, eine dritte Mischstufe, eine zweite Kavitationsstufe, eine zweite Mischstufe, eine erste Kavitationsstufe und eine erste Mischstufe.

## Revendications

1. Appareil (11) pour traiter un flux d'une substance à traiter au moyen d'un contre-courant d'une substance d'extraction, ledit appareil comprenant un ensemble de traitement motorisé (13) dans lequel lesdits flux circulent selon des directions sensiblement opposées (F1, F2) et dans lequel sont définis au moins un premier organe fixe (15) et au moins un premier organe mobile correspondant (17) rotatif par rapport à l'organe fixe et coopérant avec celui-ci pour définir un étage de cavitation correspondant (19) apte à provoquer le phénomène de cavitation hydrodynamique dans un mélange desdites substances, dans lequel ledit au moins un organe fixe (15) et/ou ledit au moins un organe mobile (17) est pourvu d'une pluralité de saillies radiales (21a, 21b), dont au moins une est configurée de manière à provoquer, lors de la rotation de l'organe mobile (17), un effet propulsif sur le flux de substance à traiter, selon une direction (F1) sensiblement opposée au contre-courant (F2) de substance d'extraction, **caractérisé en ce que** ladite au moins une saillie radiale propulsive (21a, 21b) comprend une surface propulsive (23) dont la projection sur un plan (P1) perpendiculaire à l'axe de rotation de l'organe mobile (17) détermine, sur ledit plan, une surface (23a, 23b) ayant une aire non nulle, et **en ce que** ladite au moins une saillie radiale propulsive (21a, 21b) comprend la surface propulsive (23) inclinée par rapport à l'axe de rotation (S1) de l'organe mobile (17).

2. Appareil selon la revendication 1, dans lequel l'ensemble de traitement motorisé (13) est pourvu d'au moins un second organe fixe correspondant (29) et d'au moins un second organe mobile (31) rotatif par rapport à l'organe fixe et coopérant avec celui-ci pour définir un étage correspondant de mélange turbulent (33) afin de favoriser le mélange desdites substances circulant selon des directions opposées à l'intérieur de l'ensemble de traitement motorisé.

3. Appareil selon la revendication 1 ou 2, dans lequel l'ensemble de traitement motorisé (13) comprend une pluralité d'étages de cavitation (19) et une pluralité d'étages de mélange (33), alternant les uns avec les autres et agencés de manière à être traversés successivement par ledit flux de substance à traiter et ledit contre-courant de substance d'extraction selon des directions sensiblement parallèles mais sensiblement opposées.

4. Appareil selon la revendication 3, dans lequel lesdits premiers organes fixes (15) comprennent des premiers anneaux de stator cylindriques correspondants (25) pourvus de saillies radiales (21a), et dans lequel lesdits premiers organes rotatifs (17) comprennent des disques de rotor correspondants (27) pourvus de saillies radiales (21b) et entourés par lesdits premiers anneaux de stator, et dans lequel lesdites saillies radiales (21a, 21b) sont des saillies radiales propulsives.

5. Appareil selon l'une quelconque des revendications précédentes, dans lequel ladite au moins une saillie radiale propulsive (21a, 21b) présente une configuration inclinée rectiligne ou parabolique ou en forme de sigma.

6. Appareil selon la revendication 3 ou 4 ou 5, dans lequel lesdits seconds organes fixes (29) comprennent des seconds anneaux de stator cylindriques correspondants (35), et dans lequel lesdits seconds organes rotatifs (31) comprennent une pluralité de saillies radiales (37) et sont entourés par lesdits seconds anneaux de stator, et dans lequel lesdites saillies radiales comprennent des broches cylindriques correspondantes.

7. Appareil selon l'une quelconque des revendications précédentes, dans lequel des saillies radiales adjacentes (21a, 21b) comprennent des surfaces inclinées parallèles en regard les unes des autres (23) définissant des rainures ou canaux inclinés correspondants (51a, 51b) pour le passage desdites substances.

8. Appareil selon la revendication 7, dans lequel lesdites surfaces inclinées parallèles en regard les unes des autres sont inclinées par rapport à l'axe de rotation (S1) de l'ensemble de traitement motorisé d'un angle quelconque (α) compris entre 3 et 80 degrés.

9. Appareil selon la revendication 8, dans lequel ledit angle d'inclinaison (α) est compris entre 5 et 60 degrés.

10. Appareil selon la revendication 9, dans lequel ledit angle d'inclinaison (α) est compris entre 10 et 45 degrés.

11. Appareil selon l'une quelconque des revendications précédentes, dans lequel l'étage de cavitation (19) soumet le mélange desdites substances à un régime de cavitation **caractérisé par** un nombre de cavitation σ < 1.

12. Procédé de traitement d'un flux d'une substance à traiter au moyen d'un contre-courant d'une substance d'extraction, ledit procédé comprenant les étapes consistant à :
- agencer un ensemble de traitement motorisé (13) comprenant au moins un premier organe fixe (15) et au moins un premier organe mobile correspondant (17) rotatif par rapport à l'organe fixe et coopérant avec celui-ci pour définir un étage de cavitation correspondant (19) apte à provoquer le phénomène de cavitation hydrodynamique dans un mélange desdites substances, ledit au moins un organe fixe (15) et/ou ledit au moins un organe mobile (17) étant pourvu d'une pluralité de saillies radiales (21a, 21b) comprenant une surface propulsive (23) inclinée par rapport à l'axe de rotation (S1) dudit premier organe mobile (17) ;
- provoquer le passage desdits flux dans ledit ensemble de traitement motorisé (13) selon des directions sensiblement parallèles mais sensiblement opposées ;
- favoriser, lors de la rotation du premier organe mobile, un effet propulsif sur le flux de substance à traiter, selon une direction (F1) sensiblement opposée au contre-courant (F2) de substance d'extraction, au moyen d'au moins une desdites saillies radiales (21a, 21b), dans lequel lesdites saillies radiales propulsives (21a, 21b) comprennent une surface propulsive (23) dont la projection sur un plan (P1) perpendiculaire à l'axe de rotation de l'organe mobile (17) détermine, sur ledit plan, une surface (23a, 23b) ayant une aire non nulle.

13. Procédé selon la revendication 12, dans lequel il est prévu une étape consistant à provoquer, dans lesdites substances, un mélange turbulent en amont et en aval de l'étage de cavitation.

14. Procédé selon la revendication 13, comprenant un ensemble de traitement motorisé (13) pourvu d'une pluralité d'étages de cavitation (19) et d'une pluralité d'étages de mélange (33), alternant les uns avec les autres et agencés de manière à être traversés successivement par ledit flux de substance à traiter et ledit contre-courant de substance d'extraction selon des directions parallèles mais opposées.

15. Procédé selon la revendication 14, dans lequel l'ensemble de traitement motorisé (13) comprend trois étages de cavitation (19) et quatre étages de mélange (33), dans lequel le flux de substance à traiter passe selon une première direction et traverse successivement les étages suivants : un premier étage de mélange, un premier étage de cavitation, un deuxième étage de mélange, un deuxième étage de cavitation, un troisième étage de mélange, un troisième étage de cavitation et un quatrième étage de mélange, et le contre-courant de substance d'extraction traverse lesdits étages successivement selon une seconde direction, opposée à la première direction : un quatrième étage de mélange, un troisième étage de cavitation, un troisième étage de mélange, un deuxième étage de cavitation, un deuxième étage de mélange, un premier étage de cavitation et un premier étage de mélange.
